# EUROPEAN PATENT APPLICATION

(11) **EP 1 431 808 A1**
(43) Date of publication of application: **23.06.2004**
(21) Application number: 02027965.9
(22) Date of filing: 13.12.2002
(51) Int. Cl.: G03B 21/00, G03B 21/14

(54) **Projector arrangement**

(71) Applicant: Sony International (Europe) GmbH, 10785 Berlin (DE)
(72) Inventor: Ludley, Frederic, c/o Ad. Tech. Center Stuttgart, 70327 Stuttgart (DE); Zoidis, Evangelos, c/o Ad. Tech. Center Stuttgart, 70327 Stuttgart (DE)
(74) Representative: Müller - Hoffmann & Partner

(57) **Abstract**

According to the present invention a projector arrangement (1) is proposed which is characterized in that a connecting means (2) is provided for connecting a projector unit (3) and a support or bearing unit (8) in an operation mode of the inventive projector arrangement (1). The connecting means (2) is adapted to ensure a rotatable connection between said projector unit (3) and said support or bearing unit (8), according to said rotatability, a projection angle (α₁, α₂) is changeable or adaptable in a controllable manner.

## Description

The present invention relates to a projector arrangement according to the preamble of independent claim 1.

Projectors and projector arrangements for projecting images on an external screen become more and more popular. For instance, so-called beamers or beamer arrangements are used to project images produced within a portable personal computer, e.g. a laptop or notebook, to a large audience within lectures, teaching courses of the like. Although in known projectors or projector arrangements besides a projector unit having an objective unit for optically projecting images, in particular on an external screen, and a support or bearing unit for supporting said projector unit in an operation mode of said projector arrangement are provided, it is difficult for known projector arrangements-to have conveniently adjusted the projection or inclination angle during the process of projecting. Often, additional, auxiliary, and separate elements for adjusting the projection height or angle are necessary. For instance, elements which are not typical equipment parts of the projector arrangement are used, such as books or the like.

It is an object of the present invention to provide a projector arrangement which can be adjusted with respect to the angle of inclination or the angle of projection in a particular reliable, convenient, and inherent manner without employing additional structural elements.

The object is achieved in a projector arrangement according to the generic part of independent claim 1 as described above according to the present invention with the characterizing features of independent claim 1. Preferred embodiments of the inventive projector arrangement are within the scope of the dependent sub-claims.

The projector arrangement according to the present invention is characterized in that connecting means are provided which are adapted for realizing a connection between said projector unit and said support or bearing unit in said operation mode of said projector arrangement. According to said connection established by said connecting means, said projector unit is rotatable essentially about an axis connecting said projector unit and said support or bearing unit. According to said rotatability of said projector unit with respect to said support or bearing unit an inclination angle or projection angle of said projector arrangement and in particular of said objective unit of said projector unit and further in particular with respect to an external working or operation surface and/or respect to said external screen is changeable or adaptable in a controllable manner.

It is therefore a basic idea of the present invention to establish rotatability between the provided projector unit and the connected support or bearing unit by providing connecting means. Thereby, an angle of inclination or an angle of projection can be changed and adapted in a particular controllable manner without involving additional and separate elements and means.

According to a preferred advantageous embodiment of the inventive projector arrangement said projector unit, said support or bearing unit and/or said connecting means are formed and/or adapted to realized distinct - vertical and/or horizontal - projection angles or inclination angles of said projector arrangement and in particular of its projector unit and its objective unit in said operation mode of said projector arrangement and/or in particular with respect to a horizontal plane of an external operation or working surface and/or with respect to said external screen. According to this particular measure a variety of positions or orientations can be realized by the inventive projector arrangement so as to adapt the projection functionality to the provided external screen.

Additionally or alternatively, said projector unit, said support or bearing unit and/or said connecting means are formed and/or adapted to provide a continuously distributed plurality of projection angles and/or inclination angles. Therefore, the inventive projector arrangement can be applied to larger plurality of projection situations, thereby increasing the convenience for the user.

To realize the rotatability of the connection means said connection means is or comprises a revolute joint or link, a pivot bearing and/or the like.

According to a further alternative of the present invention said connection means is or comprises a bone-like structure, in particular together with spring means for mechanically biasing the connecting means.

It is a further preferred idea of the present invention to have said support or bearing unit comprised a base portion for the projector arrangement which is adapted to support and/or to bear said projector arrangement and in particular said projector unit on an external working or operation surface.

Additionally or alternatively, said base portion is adapted to be held by a user, thereby enabling said projector arrangement to be used as a hand-held device.

Further preferred in this case is that at least the base portion is formed in a hand-shaped manner.

It is a further idea of the present invention to have said projector unit and said support or bearing unit electrically, optically, mechanically and/or thermally separated, separable and/or uncoupled. According to this particular measure best functionalities are guaranteed.

It is further preferred that said projector unit, said support or bearing unit, and/or said connecting means are designed and adapted to have said projector unit and said support or bearing unit spatially spaced apart with respect to each other.

To further guarantee reliable functionalities said projector unit comprises essentially the projector arrangement's optical means and/or said support or bearing unit comprises essentially the projector arrangement's electrical means. According to this measure the overall functionalities of the projector arrangement are separately distributed under the projector unit and the support or bearing unit.

To increase the convenience for the user it is provided that said projector unit, said support or bearing unit and in particular said connecting means are formed and adapted to realize one or an arbitrary combination or plurality of the following aspects of cooperating and/or engaging respective shapes and/or surfaces, exerting frictional interaction forces between each other, enabling a stable and/or equilibrated support of said projector unit.

Further additionally or alternatively said projector unit, said support or bearing unit and/or said connector units have a shape and/or a mass distribution so as to ensure a support by said support or bearing unit in mass or gravitational equilibrium.

Further on, flexibility is increased by having said projector unit, said support or bearing unit and/or said connecting means be designed and/or adapted to have said projector unit and said support or bearing unit detachable connected with respect to each other.

In the following these and further aspects of the present invention will become more elucidated taking into account the following remarks:

The present invention enables a high degree of flexibility, of mobility and of convenience when using the inventive projector arrangement.

This mobile projector is according to the present invention separated into two parts. These two parts are linked together for instance by a bone-like structure and a spring. To chose the right position for projection the part comprising the objective or objective lens can be turned around for at most 90° from the base part, to find appropriate projection angles. This can be then operated as a self-standing device in any vertical projection angle between 0° and 90°. The separation of the two parts, i.e. of the projector unit and the support or bearing unit in the sense of a base part, offers the possibility of keeping apart for example the electronics from the optics, in particular for a better cooling effect.

In the following the present invention will become more elucidated taking reference to the accompanying figures based on preferred embodiments of the present invention.
- **Fig. 1A, B**: demonstrate by means of a schematical and prospective side view and by means of a front view, respectively, a preferred embodiment of the inventive projector arrangement, wherein the projector unit and the support or bearing unit are not rotated relatively to each other.
- **Fig. 2A, B**: demonstrate by means of a schematical and prospective side view and by means of a front view, respectively, the same embodiment shown in Fig. 1A, 1B having the projector unit rotated against the support or bearing unit.

In the following, elements and components with similar structure and comparable function will be denoted by the same reference symbols. Their description is not repeated in each case of their occurrence.

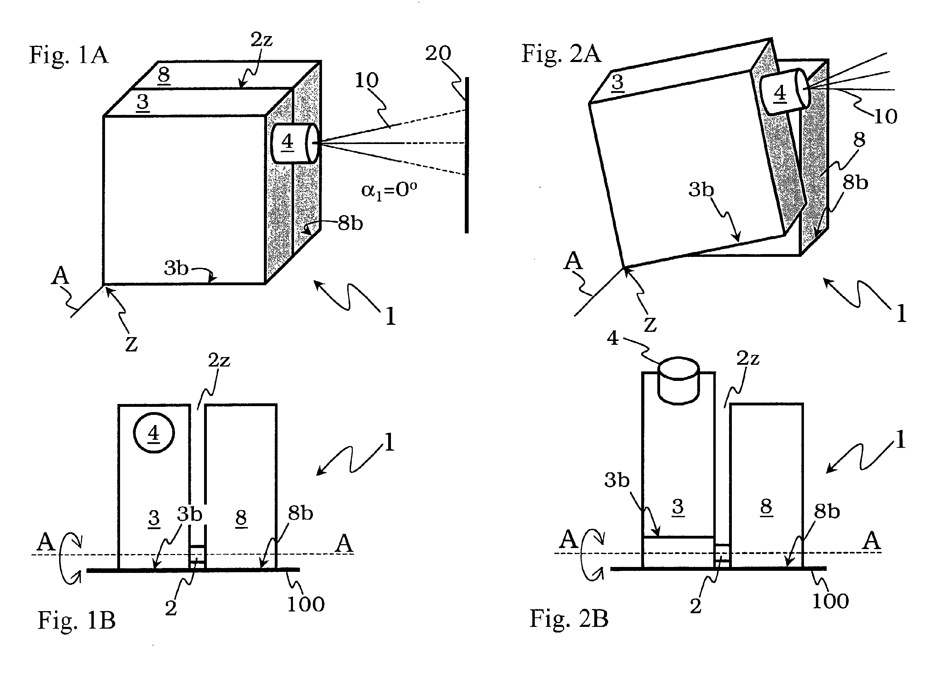

Fig. 1A is a schematic and perspective side view of a preferred embodiment of the inventive projector arrangement 1. This inventive projector arrangement 1 is constituted by a projector unit 3 and a support or bearing unit 8 which are separated spatially from each other by a interval 2z being realized by a connecting means 2 which is not explicitly shown in Fig. 1. The projector unit 3 comprises an objective unit 4 for projecting images onto an external screen 20 by using rays or beams 10 of light. Defined by the position of the connecting means 2 not explicitly shown in Fig. 1A a rotational axis A having a pivotal point Z is defined. In the case of the situation of Fig. 1 the connecting means 2 is situated between the projector unit 3 and the support or bearing unit 8 in the lower left corner area in the interval or space 2z between said projector unit 3 and said support or bearing unit 8.

The situation of Fig. 1A is more clearly elucidated taking into account the front view shown in Fig. 1B. The combination of the projector unit 3 and the support or bearing unit 8 constituting the inventive projector arrangement 1 rests on an external working or operation surface 100. As can be taken from the situation shown in Fig. 1B, the projector unit 3 and the support or bearing unit 8 are separated by an interval or space 2z defined by said connecting means 2 at the lower and rear end in said interval space 2z. The connecting means 2 is adapted for enabling a rotation between said projector unit 3 and said support or bearing unit 8 thereby defining a rotational axis A.

In the situation shown in Fig. 2A and 2B the inclination angle α₁ between the horizontal orientation and the central beam or the axis of the objective unit 4 is 0°.

In contrast, the situation shown in Fig. 2A and 2B describes a rotational state between said projector unit 3 and said support or bearing unit 8 about an angle α₂ of about 30° with respect to said rotational axis A or said pivotal point Z.

As can be seen from Fig. 2A and 2B, the support or bearing 8 unit remains rested with its bottom surface 8b on the external working or operation surface 100 whereas the bottom surface 3b of said projector unit 3 is lifted up by the rotation about the axis A.

### List of Reference Symbols

- 1: projector arrangement according to the present invention
- 2: connecting means, revolute link, pivot bearing
- 2z: interval, separation space, space
- 3: projector unit
- 3b: bottom surface
- 4: objective unit
- 8: support or bearing unit
- 8b: bottom surface
- 10: ray of light, beam for projection
- 20: external screen
- 100: external working surface, external operation surface

- A: rotational axis
- Z: pivotal point

- α₁: inclination angle, projection angle
- α₂: inclination angle, projection angle
- α₃: inclination angle, projection angle
- α₄: inclination angle, projection angle

## Claims

1. Projector arrangement, comprising:
- a projector unit (3) having an objective unit (4) for optically projecting images, in particular on an external screen (20), and
- a support or bearing unit (8) for supporting said projector unit (3) in an operation mode of said projector arrangement (1),
**characterized in**
- **that** connecting means (2) are provided which are adapted for realizing a connection between said projector unit (3) and said support or bearing unit (8) in said operation mode of said projector arrangement (1),
- **that** according to said connection established by said connecting means (2) said projector unit (3) is rotatable essentially about an axis (A) connecting said projector unit (3) and said support or bearing unit (8), and
- **that** according to said rotatability of said projector unit (3) an inclination angle (α₁, α₂) or projection angle (α₁, α₂) of said projector arrangement (1) and in particular of said objective unit (4) of said projector unit (3) and/or in particular with respect to a horizontal plane of an external operating surface (100) and/or in particular with respect to said external screen (2) is changeable or adaptable in a controllable manner.

2. Projector arrangement according to claim 1,
wherein said projector unit (3), said support or bearing unit (8) and/or said connecting means (2) are formed and/or are adapted to realized distinct - vertical and/or horizontal - projection angles (α₁, α₂) or inclination angles (α₁, α₂) of said projector arrangement (1) and in particular of its projection unit (3) and its objective unit (4) in said operation mode of said projector arrangement (1) and/or in particular with respect to a horizontal plane of an external operating surface (100) and/or with respect to said external screen (20).

3. Projector arrangement according to any one of the preceding claims 1 or 2,
wherein said projector unit (3), said support or bearing unit (8) and/or said connecting means (2) are formed and/or are adapted to provide a continuously distributed plurality of projection angles (α₁, α₂) or inclination angles (α₁, α₂).

4. Projector arrangement according to any one of the preceding claims,
wherein said connecting means (2) is or comprises a revolute joint or link, a pivot bearing and/or the like.

5. Projector arrangement according to any one of the preceding claims,
wherein said connecting means (2) is or comprises a bone-like structure in particular together with spring means for mechanically biasing the connecting.

6. Projector arrangement according to any one of the preceding claims,
wherein said support or bearing unit (8) is or comprises a base portion (2) for said projector arrangement (1),
- being adapted to support and/or to bear said projector arrangement (1) and in particular said projector unit (3) on an external working or operation surface (100) and/or
- being adapted to be held by a user, thereby enabling said projector arrangement (1) to be used as a hand-held device.

7. Projector arrangement according to any one of the preceding claims,
wherein said projector unit (3) and said support or bearing unit (8) are electrically, optically, mechanically and/or thermally separated, separable and/or uncoupled.

8. Projector arrangement according to any one of the preceding claims,
wherein said projector unit (3), said support or bearing unit (8) and/or said connecting means (2) are designed and/or adapted to have said projecting unit (3) and said support or bearing unit (8) spatially spaced apart with respect to each other.

9. Projector arrangement according to any one of the preceding claims,
- wherein said projector unit (3) comprises essentially the projector arrangement's optical means and/or
- wherein said support or bearing unit (8) comprises essentially the projector arrangement's electrical means.

10. Projector arrangement according to any one of the preceding claims,
wherein said projector unit (3), said support or bearing unit (8) and/or in particular said connecting means (2) are formed and/or adapted to realize one or an arbitrary combination or plurality of the following aspects:
- cooperation and/or engaging of respective shapes and surfaces,
- frictional interaction forces between each other,
- stable and/or equilibrated support of said projector unit (3).

11. Projector arrangement according to anyone of the preceding claims,
wherein said projector unit (3), said support or bearing unit (8) and/or said connecting means (2) have a shape and/or a mass distribution so as to ensure a support by said support or bearing unit (8) in mass and/or gravitational equilibrium.

12. Projector arrangement according to anyone of the preceding claims,
wherein said projector unit (3), said support or bearing unit (8) and/or said connecting means (2) are designed and/or adapted to have said projector unit (3) and said support or bearing unit (8) detachable connected with respect to each other.
